# EUROPEAN PATENT SPECIFICATION

(11) **EP 1 463 136 B1**
(45) Date of publication and mention of the grant of the patent: **19.11.2008**
(21) Application number: 03021821.8
(22) Date of filing: 26.09.2003
(51) Int. Cl.: H01M 8/04, H01M 8/06, H01M 16/00

(54) **Fuel cell system with air cooling device**
Brennstoffzellensystem mit Luftkühlungsanordnung
Système de pile à combustible avec dispositif de refroidissement à air

(30) Priority: 24.03.2003 CN 03120950
(43) Date of publication of application: 29.09.2004
(73) Proprietor: Asia Pacific Fuel Cell Technologies, Ltd., Chunan, Miaoli 350 (TW)
(72) Inventor: Yang, Jefferson YS, 4F 22, Ke-Dung 3 Road Chunan Miaoli 350 (TW); Hsu, Yao-Sheng, 4F 22, Ke-Dung 3 Road Chunan Miaoli 350 (TW)
(74) Representative: Goddar, Heinz J.

(56) References cited:
- US-A1- 2003 012 989
- US-A1- 2003 022 036
- US-B1- 6 413 661
- PATENT ABSTRACTS OF JAPAN vol. 2002, no. 05, 3 May 2002 (2002-05-03) -& JP 2002 008698 A (TOSHIBA CORP), 11 January 2002 (2002-01-11)
- OGINO S ET AL: "FUEL CELL POWERED ELECTRIC VEHICLE" EVS - 13. 13TH. INTERNATIONAL ELECTRIC VEHICLE SYMPOSIUM. OSAKA, OCT. 13 - 16, 1996. SESSIONS 1A - 4H, EVS. INTERNATIONAL ELECTRIC VEHICLE SYMPOSIUM, TOKYO, JEVA, JP, vol. VOL. 1 SYMP. 13, 13 October 1996 (1996-10-13), pages 671-674, XP000687930

## Description

1. Field of the Invention

The present invention relates generally to a fuel cell system, and in particularly to a fuel cell system comprising an air cooling device for improving performance thereof.

2. Description of the Prior Art

Fuel cell power system is capable of generating electrical power energy by means of electro-chemical reaction between a fuel, such as hydrogen and methanol, and an oxidizer, such as oxygen. Based on the electrolyte thereof, the fuel cell is classified as proton exchange membrane fuel cell or polymer electrolyte membrane fuel cell, abbreviated as PEMFC or PEM, alkaline fuel cell (AFC), phosphoric acid fuel cell (PAFC), molten carbonate fuel cell (MCFC) and solid oxide fuel cell (SOFC).

Among these known fuel cells, the PEMFC is the best-developed technique, having the advantages of low operation temperature, fast start-up and high power density. Thus, the PEMFC is very suitable for transportation vehicles and power generation systems, such as home power systems and other portable and stationary power generation systems.

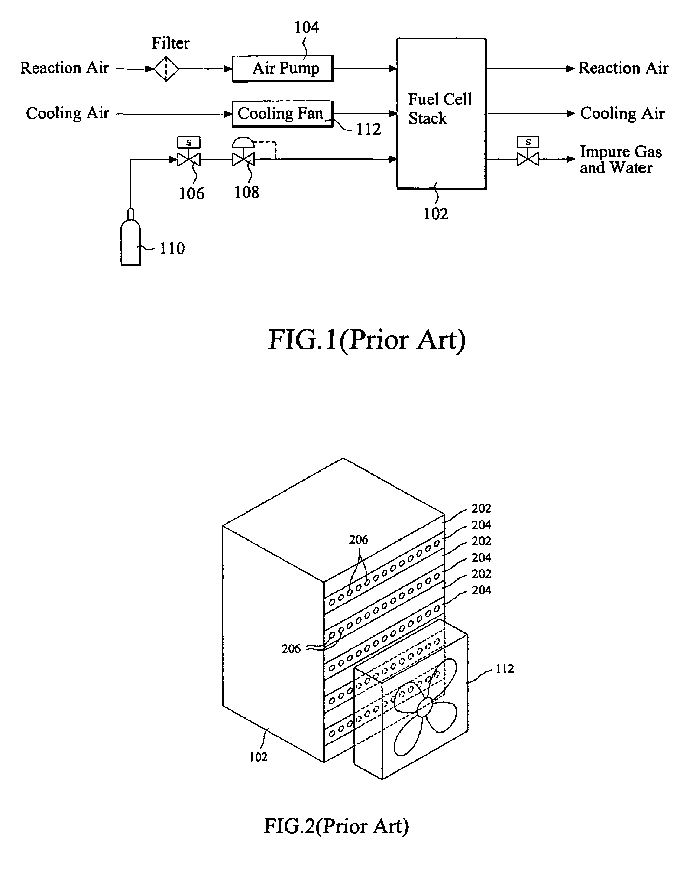

Fuel cell of power smaller than **1** kilo-watt usually comprises an air cooling device. **Figure 1** of the attached drawings shows an example of conventional power fuel cell systems comprising a fuel cell stack **102**. Air containing oxygen is drawn in by an air pump **104**, and hydrogen stored in a hydrogen canister **110** is conveyed through a solenoid valve **106** and a pressure regulator **108** to the fuel cell stack **102**. The electro-chemical reaction between the hydrogen and oxygen generates electricity with water and heat as byproducts of the reaction. The heat generated subsequently causes the rise of a temperature of the fuel cell stack **102**. When the temperature of the fuel cell stack **102** rises too high, a cooling fan **112** is driven to turn on for cooling.

**Figure 2** shows a perspective view of a conventional fuel cell comprises a cooling fan. The fuel cell stack **102** includes a plurality of fuel cell units **202,** each of which comprises an anode plate, a cathode plate, a membrane electrode assembly (MEA), and two gas diffusion layers at the two sides of MEA. Two adjacent cell units **202** sandwich a cooling plate **204** which comprises a plurality of parallelly arranged air grooves **206**. When the fuel cell stack 102 reaches a high temperature, the cooling fan **112** is driven to turn on and cooling air is drawn into the grooves **206**. The cooling air absorbs and carries away the heat inside the fuel cell stack 102**.** Subsequently, the temperature of fuel cell stack 102 is decreased.

The electro-chemical reaction between hydrogen and oxygen is highly improved in suitable moisturized condition. Accordingly, the temperature of the fuel cell stack **102** should be maintained at below 40∼60□, otherwise, there may be insufficient water and reaction rate is low. Therefore, when the fuel cell stack reaches a temperature higher than 40∼60□, the cooling fan **112** is driven to turn on for cooling. However, the cooling fan **112** can only generate cooling air of low pressure and velocity, and the cooling effect is poor. Therefore, the fuel cell stack **102** is not capable to work at heavy load and provide large working current. Moreover, an extra space is required for the placement of the cooling fan **112**.

Furthermore, to promote the electro-chemical reaction between oxygen and hydrogen, a solenoid valve **106** and a pressure regulator **108** control the flowing of hydrogen to the fuel cell stack **102**. Such a regulation limits the utility of hydrogen.

JP 2002-008698 discloses a fuel cell system according to the preamble of claim 1. The unreacted hydrogen flowing out of the fuel cell stack is discharged to the surrounding and not recirculated for use. Moreover, JP2002-008698 does not disclose how cooling by air is regulated when the fuel cell stack reaches a high temperature.

US 2003/012989A1 relates to a control device for fuel cell. An ejector is used to an ejector is provided to draw in the hydrogen in the hydrogen circulation line by means of a negative pressure. The fuel cell stack is connected to a fuel cell information unit which is electrically connected to an electric cutoff valve and a signal pressure relief valve so that information, such as the pressure of hydrogen and the pressure of air supplying to the fuel cell stack, and the temperature of the fuel cell stack may be input to the fuel cell information unit. The fuel cell information unit controls the fuel cell system through a fuel cell control unit which is connected to an electric cutoff valve at the hydrogen supply line, a hydrogen purge valve at the hydrogen exhaust line, and an on-off control valve at the hydrogen circulation line so that it can carry out the opening-closing control of the valves.

US 6,413,661 provides a method of operating a combustor to heat a fuel processor to a desired temperature in a fuel cell system. The fuel cell system comprising the fuel cell is incorporated in a vehicle propulsion system. The vehicle propulsion system comprises a battery, an electric motor, and associated drive electronics including inverter. The battery accepts and stores electrical energy supplied by the fuel cell and the motor, and to provide electric energy to motor. At the beginning of operations when the fuel cell apparatus is cold and starting up, the compressor is driven by the electric motor energized from the battery to supply air to the combustor only for reacting with the fuel to generate heat energy so as to drive the fuel processor to operate.

Ogino S et. al. discloses a fuel cell powered electric vehicle in EVS. International Electric Vehicle Symposium, Tokyo, Jeva, JP, vol. 1 Symp. 13, 13 October 1996, Pages 671-674, XP000687930. Hydrogen discharged from the metal hydride is supplied to the fuel cell. Unutilized hydrogen is recirculated to the fuel cell by a recirculator. The fuel cell and the secondary battery are connected in parallel via a diode, so that the secondary battery is recharged by the fuel cell.

US 2003/022036A1 teaches a fuel cell system comprising a fuel cell stack, a microcontroller, at least one actuator and at least one sensor proximate the fuel cell stack to detect an operating parameter of the fuel cell stack. The microcontroller is coupled to receive signals from the sensor and to provide signals to the actuator and configured at least a portion of a self-test of general registers while the system is in a starting state, and at least a portion of a self-test while in a running state.

It is thus desired to provide a fuel cell system that overcomes the above-discussed disadvantages of the prior art. The present invention provides a fuel cell system according to claim 1, which enables the fuel cell stack to work at higher temperature while it does not require a cooling fan for cooling.

### SUMMARY OF THE INVENTION

Thus, an object of the present invention is to provide a fuel cell power system which comprises a fuel cell stack, an air humidifier, a blower, a hydrogen storage, a flow and pressure regulator, a hydrogen recirculator and a control circuit. The air humidifier humidifies the air supplied to the fuel cell stack with the humidity from the fuel cell stack, the blower drives the air containing oxygen to the air humidifier and fuel cell stack, the hydrogen storage stores and supplies hydrogen to the fuel cell stack, a flow and pressure regulating device regulates the hydrogen flow, the hydrogen recirculator receives excessive hydrogen from the fuel cell stack and circulates the hydrogen back into the fuel cell stack, and the control circuit electrically controls the flow and pressure regulating device and the blower.

To achieve the above objects, in accordance with the present invention, there is provided a fuel cell system which is capable of humidifying and supplying the air to fuel cell stack, so that even when the working temperature rises, there is sufficient moisture in the fuel cell stack for performing electro-chemical reaction at high rate. It enables the fuel cell stack to work at heavy load and provide large working current. Moreover, the fuel cell stack does not require a cooling fan for cooling, and production cost and space are greatly saved. Furthermore, unreacted and excessive hydrogen is recirculated to the fuel cell system. By this means, the utility of hydrogen is highly enhanced.

### BRIEF DESCRIPTION OF THE DRAWINGS

The present invention will be apparent to those skilled in the art by reading the following description of a number of preferred embodiments thereof, with reference to the attached drawings, in which:

Figure 1 is a system block diagram of a conventional fuel cell system;

Figure 2 is a perspective view of a conventional fuel cell system comprising a cooling fan;

Figure 3 is a system block diagram of a fuel cell system constructed in accordance with the present invention;

Figure 4 is a perspective view of the fuel cell system constructed in accordance with the present invention;

Figure 5 is a block diagram of an application of the fuel cell system of the present invention in an electrical vehicle;

Figure 6 is a block diagram of another application of the fuel cell system of the present invention in an alternating current power generation system; and

Figure 7 is a block diagram of a further application of the fuel cell system of the present invention in a direct current power generation system.

### DETAILED DESCRIPTION OF THE PREFERRED EMBODIMENTS

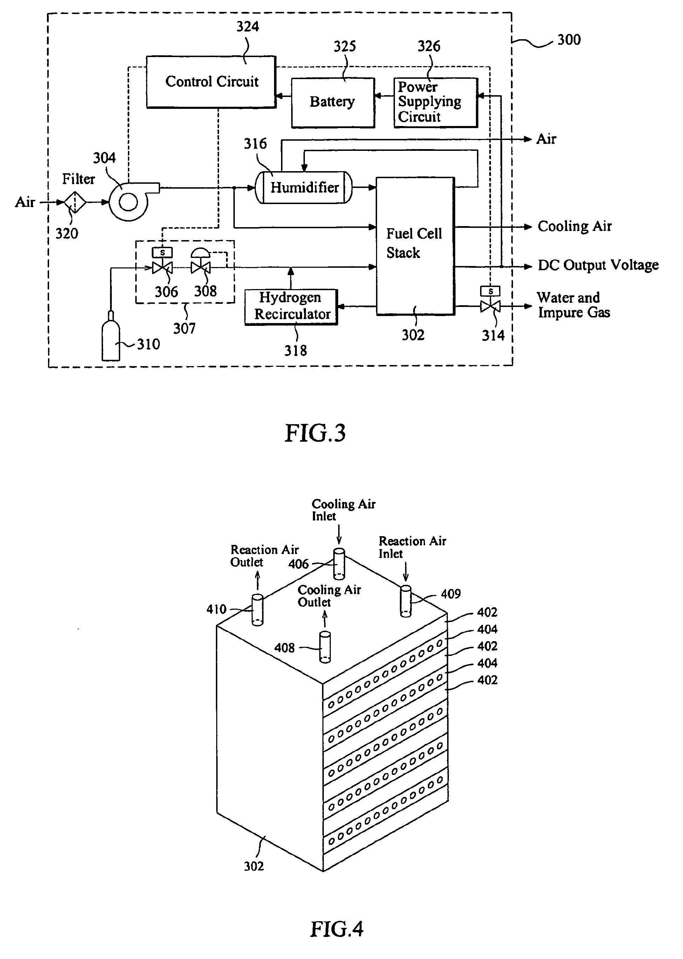

With reference to the drawings and in particular to **Figure 3**, a low power fuel cell system in accordance with the present invention, generally designated with reference numeral **300**, comprises a fuel cell stack **302**, which receives hydrogen from a hydrogen storage **310** that may comprise an alloy based hydrogen canisters or pressurized hydrogen canister. The supply of the hydrogen from the hydrogen storage **310** to the fuel cell stack **302** is regulated by a flow and pressure regulating device **307**. Also, a hydrogen recirculator **318** is connected to the fuel cell stack **302** for recirculation of hydrogen back into the fuel cell stack **302.**

Air is drawn in by a blower **304** through an air filter **320.** Impurities contained in the air are filtered by the filter **320.** Part of the filtered air is conveyed directly via an air humidifier **316** to the fuel cell stack **302** and is used for reaction, while the other part of the filtered air is conveyed to the fuel cell stack for cooling the fuel cell stack **302**.

As shown in **Figure 4****,** the fuel cell stack **302** includes a plurality of fuel cell units **402,** each of which comprises an anode plate, a cathode plate, a membrane electrode assembly (MEA) and two gas diffusion layers at the two sides of MEA. Two adjacent cell units **402** sandwich a cooling plate **404** which comprises a plurality of parallelly arranged air grooves. The blower **304** drives the cooling air through a cooling air inlet **406** into the air grooves. The cooling air absorbs and carries away the heat in the fuel cell stack **302** and flows out from the cooling air outlet **408**. When the load of fuel cell stack **302** is increased, a substantial quantity of heat is generated from the electro-chemical reaction, and the temperature of the fuel cell stack **302** significantly rises. In this situation, the blower **304** will drive more cooling air into the fuel cell stack **302** to cool down the working temperature. Since the air flow generated by the blower **304** has high pressure and velocity, the heat dissipation effect of the cooling air is excellent. Thereby, the working temperature of the fuel cell stack **302** is effectively reduced, and no other cooling device e.g. a cooling fan is required. Hence, production cost and space are largely saved. Humid air from the air humidifier **316** is conveyed into the fuel cell stack **302** via a reaction air inlet **409** and air is conveyed out of the fuel cell stack **302** via a reaction air outlet **410**.

The air humidifier **316** also receives reaction air from the fuel cell stack **302**, which carries a great amount of moisture since water is continuously and rapidly generated by reaction in the fuel cell stack **302**. The fresh air drawn in by the air blower **304** can absorb water from the humid air in the humidifier 316 to provide the outlet air with the desired humidity. The air is then fed into the fuel cell stack **302**. The moisture contained in the outlet air effectively promotes the reaction in the fuel cell stack **302**. Moreover, the recycle of humid air from the fuel cell stack **302** maintains the fuel cell stack **302** at an appropriate moisture content even at a temperature higher than 40∼60□, and hence the fuel cell stack may work at high performance Therefore, the fuel cell stack **302** is capable of working at heavy load and providing large working current with high performance.

The supply of hydrogen that is stored in the canister of the hydrogen storage **310** is controlled and regulated by the flow and pressure regulating device **307** which comprises a solenoid valve **306** and a pressure regulating valve **308**. The solenoid valve **306** is controlled by a control circuit **324**, such that it is selectively turned on or off for the flowing of the hydrogen from the hydrogen storage **310**, while the pressure regulating valve **308** regulates the pressure of the hydrogen flowing through the solenoid valve **306** to the fuel cell stack **302.**

The hydrogen recirculator **318** draws unreacted and excessive hydrogen from the fuel cell stack **302** and circulates the hydrogen back into the fuel cell stack **302**. This induces a forced flowing of hydrogen through the fuel cell stack **302**, and subsequently hydrogen is uniformly distributed. Thereby, the reaction between the hydrogen and the oxygen is promoted and the performance of the fuel cell is improved.

The exhaust valve **314**, which may be a solenoid valve, is controlled by the control circuit **324** to remove undesired water and impurities from the fuel cell stack **302** at a regular interval. This maintains the purity of the hydrogen inside the fuel cell stack **302**. Also, accumulation of water inside hydrogen passages of the fuel cell stack **302** can be eliminated in order to maintain the performance of the fuel cell stack **302**.

The control circuit **324** electrically controls the operation of the flow and pressure regulating device **307** to regulate the hydrogen flowing into the fuel cells stack **302**. The control circuit **324** also electrically controls the blower **304** to regulate the air flowing to the air humidifier **316** and the fuel cell stack **302**. The control circuit **324** electrically controls the exhaust valve **314** for expelling impurities and water from the fuel cell stack **302**. In addition, the control circuit **324** may conduct a self-diagnosis, such as detection of the hydrogen pressure of the hydrogen storage **310**, and examination of the operation conditions of the blower **304**, the solenoid valve **306**, the exhaust valve **314**, the fuel cell stack **302** and, if desired, the control circuit **324** itself.

A backup battery set **325** may be incorporated in the fuel cell system **300** for powering the control circuit **324** in starting up the fuel cell system **300**. The backup battery set **325** may comprise a lead-acid battery or the like, which supplies electricity to the control circuit **324** when the fuel cell system **300** is started. The power of the backup battery **325** is also supplied to other devices, such as the blower **304**, the solenoid valve **306** and the exhaust valve **314** for the startup operation. Once the fuel cell system **300** is properly started, electricity supplied from the fuel cell stack **302** recharges the backup battery set **325** via a power supplying circuit **326** to maintain future operability of the backup battery set **325**. The power supplying circuit **326** converts the DC output voltage from the fuel cell stack **302** into a working voltage for the control circuit **324** and the backup battery set **325**.

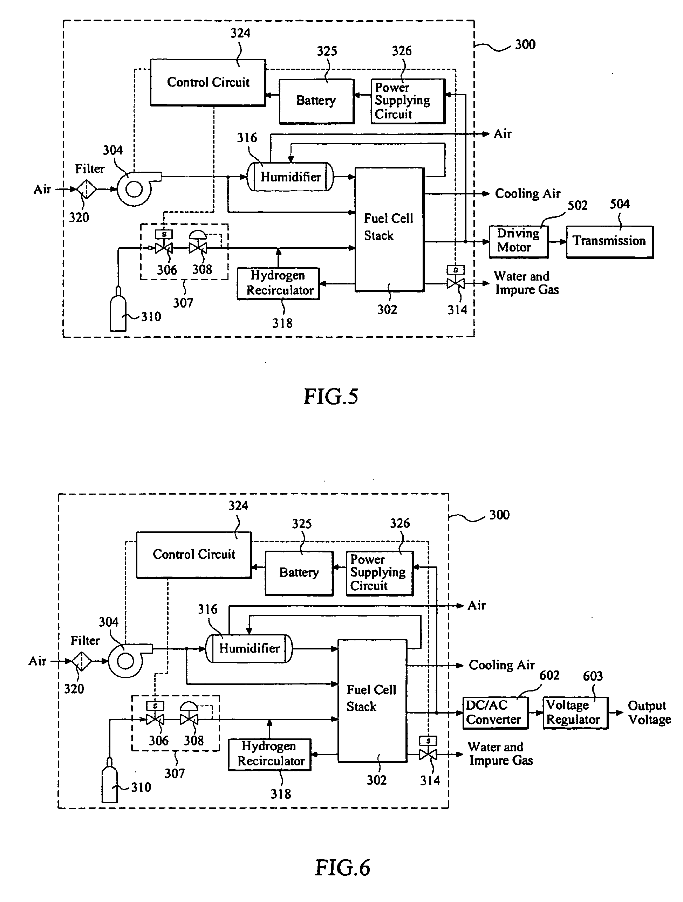

Fuel cell power system of power smaller than 1 kilo-watt is simple in structure and inexpensive. It is usually applied in applications requiring low power, such as electrical vehicles and low power generators. **Figure 5** shows an application of the fuel cell system **300** of the present invention in an electrical vehicle wherein the fuel cell stack **302** of the fuel cell system **300** generates a DC output voltage, which is applied to a driving motor **502** for driving a transmission **504** of the electrical vehicle. It is noted that the components and parts of the fuel cell system **300** of the present invention that is illustrated in **Figure 3** are completely incorporated in **Figure 5** for clarity.

**Figure 6** shows another application of the fuel cell system **300** of the present invention in an alternating current power generator, which may be portable or stationary. The fuel cell stack **302** of the fuel cell system **300** generates a DC output voltage, which is applied to a DC-to-AC converter **602** for converting the DC output voltage generated by the fuel cell stack **302** into an AC output voltage. The alternating current outputted from the DC-to-AC converter **602** flows through a voltage regulator **603** for voltage regulation. Frequency of the alternate current so generated may be changed as desired e.g. 60/50Hz. It is noted that the components and parts of the fuel cell system **300** of the present invention that is illustrated in **Figure 6** are completely incorporated in **Figure 3** for clarity.

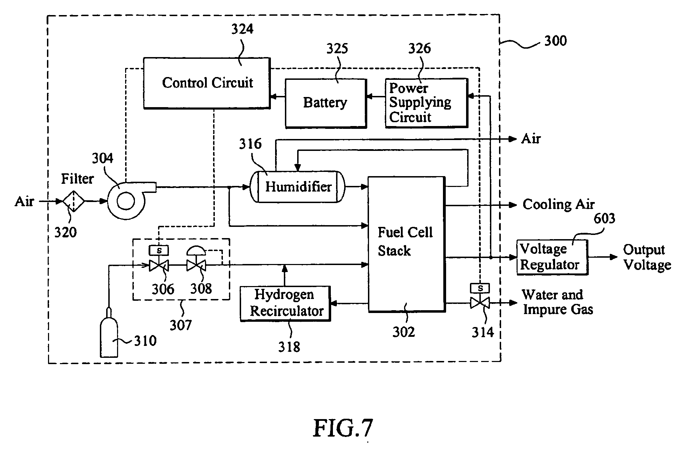

**Figure 7** shows a further application of the fuel cell system **300** of the present invention in a direct current power generator, which may be portable or stationary. The fuel cell stack **302** of the fuel cell system **300** generates a DC output voltage, which is directly applied to a voltage regulator 603 for voltage regulation. It is noted that the components and parts of the fuel cell system **300** of the present invention that is illustrated in **Figure 7** are completely incorporated in **Figure 3** for clarity.

To this point, it can be noted that the fuel cell system of the present invention provides humidified air containing oxygen to the fuel cell stack for enhancing the reaction and to avoid insufficiency of water in case of heavy loads. It is also noted that the recirculation of the hydrogen back to the fuel cell stack helps promoting electro-chemical reaction inside the fuel cell stack. Part of the air drawn in by the blower is conveyed directly to the fuel cell stack for cooling down of the temperature, and hence no cooling device such as cooling fan is required.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A fuel cell system (300) comprising:
a fuel cell stack (302) provided with a cooling air inlet (406), a cooling air
outlet (408), a reaction air inlet (409), a reaction air outlet (410), a hydrogen inlet, and a hydrogen outlet;
an air supply system supplying an air flow to the fuel cell stack (302), comprising:
a blower (304) for driving the air to the cooling air inlet (406) of the fuel cell stack (302) for cooling the fuel cell stack (302);
an air humidifier (316) connected between the blower (304) and the reaction air inlet (409) of the fuel cell stack (302) for humidifying the air supplied to the fuel cell stack (302);
a hydrogen supply system supplying hydrogen to the gas inlet of the fuel cell stack (302), comprising:
a hydrogen storage (310) in which hydrogen is stored and from which a hydrogen flow is supplied to the fuel cell stack (302) via the gas inlet;
a flow and pressure regulating device (307) connected between the hydrogen storage (310) and the gas inlet of the fuel cell stack (302) for regulating the hydrogen flow;
**characterized in that** the fuel cell system (300) comprises a hydrogen recirculator (318) connected between the gas inlet of the fuel cell stack (302) and the gas outlet for receiving an excessive hydrogen from the gas outlet of the fuel cell stack (302) and forcing the hydrogen back into the gas inlet of the fuel cell stack (302) in order to induce a hydrogen flow circulation inside the fuel cell stack (302); and a control circuit (324) electrically connected to the flow and pressure regulating device (307) for regulating the hydrogen flow toward the fuel cell stack (302) and electrically connected to the blower (304) to regulate the air flow to the fuel cell stack (302) and the air humidifier (316).

2. The fuel cell system as claimed in Claim 1 further comprising:
a battery set (325) for powering the control circuit (324);
a power supplying circuit (326) for receiving and converting a DC output voltage from the fuel cell stack (302) into a working voltage for powering the control circuit (324) and charging the battery set (325);
an exhaust valve (314) controlled by the control circuit (324) to expel impurities and water from the fuel cell stack (302); and
a filter (320) for removing impurities from the air drawn in by the blower (304).

3. The fuel cell system as claimed in Claim 1, wherein the hydrogen storage (310) comprises an alloy based hydrogen storage canister.

4. The fuel cell system as claimed in Claim 1, wherein the flow and pressure regulating device (307) comprises:
a solenoid valve (306) controlled by the control circuit (324) for selectively shutting down the hydrogen flow; and
a pressure regulating valve (308) for regulating the pressure of the hydrogen flow.

5. The fuel cell system as claimed in Claim 1, wherein the fuel cell stack (302) is electrically connected to a driving motor (502) of an electrical vehicle, and a DC output voltage generated by the fuel cell stack (302) is applied to the driving motor (502).

6. The fuel cell system as claimed in Claim 1, wherein the fuel cell stack is electrically connected to an alternating current power generation system composed of a direct current to alternating current converter (602) and a voltage regulator (603) , and a DC output voltage generated by the fuel cell stack (302) is applied to the alternating current power generation system.

7. The fuel cell system as claimed in Claim 1, wherein the fuel cell stack (302) is electrically connected to a direct current power generation system comprising a voltage regulator (603), and a DC output voltage generated by the fuel cell stack (302) is applied to the direct current power generation system.

## Patentansprüche

1. Brennstoffzellensystem (300), umfassend:
einen Brennstoffzellenstapel (302), der mit einem Kühllufteinlass (406), einem Kühlluftauslass (408), einem Reaktionslufteinlass (409), einem Reaktionsluftauslass (410), einem Wasserstoffeinlass und einem Wasserstoffauslass versehen ist;
ein Luftversorgungssystem, das den Brennstoffzellenstapel (302) mit einer Luftströmung versorgt, umfassend:
ein Gebläse (304) zum Fördern der Luft zum Kühllufteinlass (406) des Brennstoffzellenstapels (302) zum Kühlen des Brennstoffzellenstapels (302);
einen Luftanfeuchter (316), der zwischen dem Gebläse (304) und dem Reaktionslufteinlass (409) des Brennstoffzellenstapels (302) zum Anfeuchten der an den Brennstoffzellenstapel (302) gelieferten Luft angeschlossen ist;
ein Wasserstoffversorgungssystem, das den Gaseinlass des Brennstoffzellenstapels (302) mit Wasserstoff versorgt, umfassend:
einen Wasserstoffspeicher (310), in dem Wasserstoff gespeichert ist und aus dem der Brennstoffzellenstapel (302) über den Gaseinlass mit einer Wasserstoffströmung versorgt ist;
eine Durchfluss- und Druckregeleinrichtung (307), die zum Regeln der Wasserstoffströmung zwischen dem Wasserstoffspeicher (310) und dem Gaseinlass des Brennstoffzellenstapels (302) angeschlossen ist;
**dadurch gekennzeichnet, dass** das Brennstoffzellensystem (300) einen zwischen dem Gaseinlass des Brennstoffzellenstapels (302) und dem Gasauslass angeschlossenen Wasserstoffumwälzer (318) zum Empfangen von überschüssigem Wasserstoff vom Gasauslass des Brennstoffzellenstapels (302) und Zurückdrücken des Wasserstoffes in den Gaseinlass des Brennstoffzellenstapels (302), um eine Zirkulation der Wasserstoffströmung innerhalb des Brennstoffzellenstapels (302) zu induzieren, und eine Steuerschaltung (324) aufweist, die mit der Durchfluss- und Druckregeleinrichtung (307) zum Regeln der Wasserstoffströmung zum Brennstoffzellenstapel (302) elektrisch verbunden und mit dem Gebläse (304) zum Regeln der Luftströmung zum Brennstoffzellenstapel (302) und zum Luftanfeuchter (316) elektrisch verbunden ist.

2. Brennstoffzellensystem nach Anspruch 1, ferner umfassend:
einen Batteriesatz (325) zum Speisen der Steuerschaltung (324);
eine Stromversorgungsschaltung (326) zum Empfangen und Umwandeln einer DC-Ausgangsspannung vom Brennstoffzellenstapel (302) in eine Arbeitsspannung zum Speisen der Steuerschaltung (324) und Laden des Batteriesatzes (325);
ein Auslassventil (314), das von der Steuerschaltung (324) zum Ausstoßen von Verunreinigungen und Wasser aus dem Brennstoffzellenstapel (302) gesteuert ist; und
einen Filter (320) zum Entfernen von Verunreinigungen aus der vom Gebläse (304) angesaugten Luft.

3. Brennstoffzellensystem nach Anspruch 1, **dadurch gekennzeichnet, dass** der Wasserstoffspeicher (310) einen Wasserstoffspeicherbehälter auf Legierungsbasis aufweist.

4. Brennstoffzellensystem nach Anspruch 1, **dadurch gekennzeichnet, dass** die Durchfluss-und Druckregeleinrichtung (307) aufweist:
ein Magnetventil (306), das zum wahlweisen Abschalten der Wasserstoffströmung von der Steuerschaltung (324) gesteuert ist; und
ein Druckregelventil (308) zum Regeln des Drucks der Wasserstoffströmung.

5. Brennstoffzellensystem nach Anspruch 1, **dadurch gekennzeichnet, dass** der Brennstoffzellenstapel (302) mit einem Antriebsmotor (502) eines elektrischen Fahrzeugs elektrisch verbunden ist und eine von dem Brennstoffzellenstapel (302) erzeugte DC-Ausgangsspannung an dem Antriebsmotor (502) anliegt.

6. Brennstoffzellensystem nach Anspruch 1, **dadurch gekennzeichnet, dass** der Brennstoffzellenstapel mit einem Wechselstrom-Energieerzeugungssystem elektrisch verbunden ist, das aus einem Gleichstrom-zu-Wechselstrom-Umwandler (602) und einem Spannungsregler (603) besteht, und eine von dem Brennstoffzellenstapel (302) erzeugte DC-Ausgangsspannung an dem Wechselstrom-Energieerzeugungssystem anliegt.

7. Brennstoffzellensystem nach Anspruch 1, **dadurch gekennzeichnet, dass** der Brennstoffzellenstapel (302) mit einem Gleichstrom-Energieerzeugungssystem, das einen Spannungsregler (603) aufweist, elektrisch verbunden ist, und eine von dem Brennstoffzellenstapel (302) erzeugte DC-Ausgangsspannung an dem Gleichstrom-Energieerzeugungssystem anliegt.

## Revendications

1. Un système de piles à combustible (300) comprenant :
un empilement de piles à combustible (302) doté d'une entrée d'air de refroidissement (406), d'une sortie d'air de refroidissement (408), d'une entrée d'air de réaction (409), d'une sortie d'air de réaction (410), d'une entrée d'hydrogène et d'une sortie d'hydrogène ;
un système d'alimentation en air fournissant une circulation d'air à l'empilement de piles à combustible (302) comprenant :
une soufflante (304) pour envoyer l'air à l'entrée d'air de refroidissement (406) de l'empilement de piles à combustible (302) pour refroidir l'empilement de piles à combustible (302) ;
un humidificateur d'air (316) connecté entre la soufflante (304) et l'entrée d'air de réaction (409) de l'empilement de piles à combustible (302) pour humidifier l'air
fourni à l'empilement de piles à combustible (302) ;
un système d'alimentation en hydrogène fournissant de l'hydrogène à l'entrée de gaz de l'empilement de piles à combustible (302) comprenant :
un stockage d'hydrogène (310) dans lequel l'hydrogène est stocké et à partir duquel un flux d'hydrogène est fourni à l'empilement de piles à combustible (302) par l'intermédiaire de l'entrée de gaz ;
un dispositif de régulation de flux et de pression (307) connecté entre le stockage d'hydrogène (310) et l'entrée de gaz de l'empilement de piles à combustible (302)
pour la régulation du flux d'hydrogène ;
**caractérisé en ce que** le système de piles à combustible (300) comprend un recirculateur d'hydrogène (318) connecté entre l'entrée de gaz de l'empilement de piles à combustible (302) et la sortie de gaz pour recevoir l'hydrogène en excès de la sortie de gaz de l'empilement de piles à combustible (302) et pour refouler l'hydrogène dans l'entrée de gaz de l'empilement de piles à combustible (302) de manière à provoquer une circulation de flux d'hydrogène à l'intérieur de l'empilement de piles à combustible (302) ; et un circuit de commande (324) connecté électriquement au dispositif de régulation de flux et de pression (307) pour réguler le flux d'hydrogène fourni à l'empilement de piles à combustible (302) et connecté électriquement à la soufflante (304) pour réguler le flux d'air fourni à l'empilement de piles à combustible (302) et à l'humidificateur d'air (316).

2. Système de piles à combustible selon le procédé de la Revendication 1 comprenant :
un bloc-batterie (325) pour alimenter le circuit de commande (324) ;
un circuit d'alimentation (326) pour recevoir et convertir une tension de sortie CC provenant de l'empilement de piles à combustible (302) en une tension de travail pour l'alimentation du circuit de commande (324) et le chargement du bloc-batterie (325)
une soupape d'échappement (314) contrôlée par le circuit de commande (324) pour évacuer des impuretés et de l'eau de l'empilement de piles à combustible (302) ; et
un filtre (320) pour l'extraction des impuretés de l'air aspiré par la soufflante (304).

3. Système de piles à combustible selon le procédé de la Revendication 1, le stockage d'hydrogène (310) comprenant un cylindre de stockage de l'hydrogène mettant en jeu un alliage.

4. Système de piles à combustible selon le procédé de la Revendication 1, le dispositif de régulation de flux et de pression (307) comprenant :
une soupape à solénoïde (306) contrôlée par le circuit de commande (324) pour arrêter sélectivement le flux d'hydrogène ; et
une soupape de régulation de la pression (308) pour réguler la pression du flux d'hydrogène.

5. Système de piles à combustible selon le procédé de la Revendication 1, l'empilement de piles à combustible (302) étant électriquement connecté à un moteur d'entraînement (502) d'un véhicule électrique et une tension de sortie CC générée par l'empilement de piles à combustible (302) étant appliquée au moteur d'entraînement (502).

6. Système de piles à combustible selon le procédé de la Revendication 1, l'empilement de piles à combustible étant électriquement connecté à un générateur de courant alternatif consistant en un convertisseur de courant direct en courant alternatif (602) et en un régulateur de tension (603), et une tension de sortie CC générée par l'empilement de piles à combustible (302) étant appliquée au générateur de courant alternatif.

7. Système de piles à combustible selon le procédé de la Revendication 1, l'empilement de piles à combustible (302) étant électriquement connecté à un générateur de courant direct comprenant un régulateur de tension (603), et une tension de sortie CC générée par l'empilement de piles à combustible (302) étant appliquée au générateur de courant direct.
